(19) Europäisches Patentamt
European Patent Office
Office européen des brevets

(11) EP 4 391 136 B1

(12) **EUROPEAN PATENT SPECIFICATION**

(45) Date of publication and mention of the grant of the patent:
**15.04.2026 Bulletin 2026/16**

(21) Application number: **22887558.9**

(22) Date of filing: **25.10.2022**

(51) International Patent Classification (IPC):
***H01M 10/0567*** *(2010.01)* ***H01M 10/052*** *(2010.01)*
***H01M 10/0525*** *(2010.01)* ***H01M 4/525*** *(2010.01)*
***H01M 4/505*** *(2010.01)* ***H01M 4/36*** *(2006.01)*
***H01M 4/587*** *(2010.01)* ***H01M 10/0569*** *(2010.01)*

(52) Cooperative Patent Classification (CPC):
**H01M 10/052; H01M 4/36; H01M 4/505; H01M 4/525; H01M 4/587; H01M 10/0525; H01M 10/0567; H01M 10/0569;** H01M 4/364; H01M 2300/0025; H01M 2300/0037; Y02E 60/10

(86) International application number:
**PCT/KR2022/016347**

(87) International publication number:
**WO 2023/075362 (04.05.2023 Gazette 2023/18)**

(54) **LITHIUM SECONDARY BATTERY COMPRISING A NON-AQUEOUS ELECTROLYTE**

LITHIUMSEKUNDÄRBATTERIE UMFASSEND EINEN WASSERFREIEN ELEKTROLYTEN

BATTERIE SECONDAIRE AU LITHIUM COMPRENANT UN ÉLECTROLYTE NON AQUEUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.10.2021 KR 20210143854**

(43) Date of publication of application:
**26.06.2024 Bulletin 2024/26**

(73) Proprietor: **LG Energy Solution, Ltd.**
**Seoul 07335 (KR)**

(72) Inventors:
- **PARK, Sol Ji**
  **Daejeon 34122 (KR)**
- **LEE, Jung Hoon**
  **Daejeon 34122 (KR)**
- **LEE, Chul Haeng**
  **Daejeon 34122 (KR)**
- **KANG, Yoo Sun**
  **Daejeon 34122 (KR)**
- **LEE, Jae Won**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**CN-A- 111 740 163**
**CN-A- 112 993 400**
**CN-A- 113 270 632**
**CN-A- 113 328 143**
**KR-A- 20200 089 623**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application claims priority from Korean Patent Application No. 10-2021-0143854, filed on October 26, 2021.
The present invention relates to a lithium secondary battery comprising a non-aqueous electrolyte.

### BACKGROUND ART

A lithium secondary battery may be miniaturized and have high energy density and working voltage, and thus has been applied to various fields such as mobile devices, electronic products, and electric vehicles
A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte that becomes a medium for transferring the lithium ions is injected thereinto and the battery case is then sealed.
As the organic solvent of the non-aqueous electrolyte solution, propylene carbonate was mainly used, but has a problem of causing an irreversible decomposition reaction with graphite materials. Thus, in recent times, ethylene carbonate has widely been used to solve the problem.
However, there are also problems in that the temperature at which ethylene carbonate can be used is limited due to its high melting point and ethylene carbonate can cause significant degradation of battery performance at low temperatures. Therefore, there is a need to develop an electrolyte solution for a lithium secondary battery capable of stably operating in various environments by supplementing these problems.
As the fields of lithium secondary batteries are diversifying, shortening the charging time for user convenience has emerged as a major task. Lithium secondary batteries known from prior art are disclosed in CN111740163 A and CN113328143 A.

### DISCLOSURE OF THE INVENTION

### TECHNICAL PROBLEM

In order to solve the above problems, the present invention aims to provide a non-aqueous electrolyte solution for a lithium secondary battery which contributes to improving rapid charging performance and low-temperature output characteristics by comprising a combination of specific additives, and a lithium secondary battery comprising the same.

### TECHNICAL SOLUTION

According to an aspect of the present invention as claimed in the appended claims, there is provided a lithium secondary battery comprising a positive electrode comprising a positive electrode active material; a negative electrode comprising a negative electrode active material; a separator disposed between the positive electrode and the negative electrode; and a non-aqueous electrolyte solution comprising:

an organic solvent;
a lithium salt;
a first additive which is a compound represented by Formula 1;
a second additive which is a compound represented by Formula 2; and
a third additive which is one or more of vinylene carbonate and vinylethylene carbonate,

[Formula 1] $P[OSi(R1)_3]_3$

in Formula 1,
R1 is an alkyl group having 1 to 5 carbon atoms,

[Formula 2]

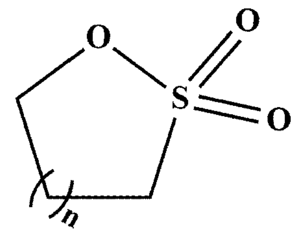

in Formula 2,

n is an integer of 1, the total weight of the non-aqueous electrolyte solution; the content of the second additive is in the range of 0.1 wt% to 5 wt% based on the total weight of the non-aqueous electrolyte solution; the weight ratio of the third additive to the first additive is greater than 1:1 and less than or equal to 5:1; and the positive electrode active material comprises a lithium-nickel-cobalt-manganese-based composite oxide represented by Formula 3:

[Formula 3] $Li_{1+x}(Ni_aCo_bMn_cM_d)O_2$

in Formula 3, M is one or more of W, Cu, Fe, V, Cr, Ti, Zr, Zn, Al, In, Ta, Y, La, Sr, Ga, Sc, Gd, Sm, Ca, Ce, Nb, Mg, B and Mo, 1+x, a, b, c and d are each an atomic fraction of an independent element, $-0.2 \leq x \leq 0.2$, $0.80 \leq a < 1$, $0 < b \leq 0.1$, $0 < c \leq 0.10$, $0 \leq d \leq 0.03$, and a+b+c+d=1.

## ADVANTAGEOUS EFFECTS

The present invention may provide a lithium secondary battery having excellent capacity retention rates under rapid charging and low temperature conditions by including the non-aqueous electrolyte solution for a lithium secondary battery of the present invention.

## MODE FOR CARRYING OUT THE INVENTION

Hereinafter, the present invention will be described in more detail.

In general, a non-aqueous electrolyte solution for a lithium secondary battery includes ethylene carbonate, which has excellent affinity with carbon materials, as an organic solvent, but the output characteristics are degraded in a low-temperature environment as ethylene carbonate has a high melting point.

In addition, in the case of a lithium secondary battery to which a conventional non-aqueous electrolyte solution is applied, the movement of lithium ions is not free due to the resistor of the film formed during activation. When rapid charging is performed, lithium is precipitated on the surface of the electrode, which leads to a reduction in the lifespan due to a loss and depletion of lithium.

Accordingly, the present inventors have found a combination of additives for a non-aqueous electrolyte solution that can solve the above problems. Specifically, they have confirmed that combining the effect of forming a film having lower resistance compared to conventional non-aqueous electrolyte solutions by modifying the film components of the electrode by using the compound represented by Formula 1 below, the effect of improving the resistance and durability of the film through the modification of the film components of the electrode by using the compound represented by Formula 2 below, and the effect of improving the durability of the negative electrode film through the formation of the negative electrode protective film with vinylene carbonate and/or vinylethylene carbonate further improves the effect of improving the resistance and durability of the film components, and this may effectively improve the rapid charging lifespan through the effect of reducing lithium precipitation during rapid charging while making the movement of lithium ions easier.

Hereinafter, each component constituting the present invention will be described in more detail.

### Non-aqueous Electrolyte Solution

The present invention provides a non-aqueous electrolyte solution for a lithium secondary battery comprising an organic solvent, a lithium salt, and a first additive to a third additive below.

Hereinafter, each component of the non-aqueous electrolyte solution will be described in more detail.

(1) **First to third additives**

The non-aqueous electrolyte solution of the present invention comprises a first additive which is a compound

represented by Formula 1 below.

[Formula 1] $P[OSi(R1)_3]_3$

in Formula 1,
R1 is an alkyl group having 1 to 5 carbon atoms.

In an embodiment of the present invention, R1 of Formula 1 may be a methyl group. That is, the first additive may be a compound represented by Formula 1A.

[Formula 1A]

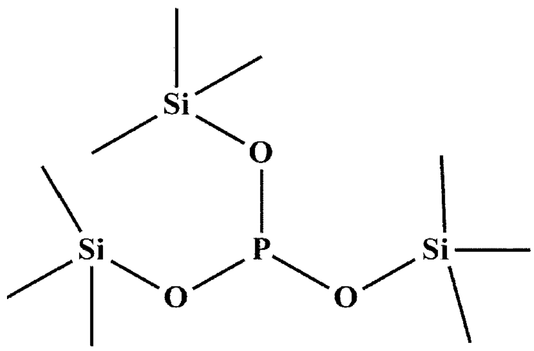

In one embodiment of the present invention, a content of the first additive may be in a range of 0.1 wt% to 5 wt% based on the total weight of the non-aqueous electrolyte solution, preferably 0.3 wt% to 3 wt%, and more preferably 0.5 wt% to 2 wt%.

When the content of the first additive is 0.1 wt% or more, it is preferable because it may exhibit an effect that contributes to forming a film on an electrode. When the content of the first additive is 5 wt% or less, it is preferable in that it may control aging characteristics and gas generation caused by side reactions.

The non-aqueous electrolyte solution of the present invention comprises a second additive which is a compound represented by Formula 2 below.

[Formula 2]

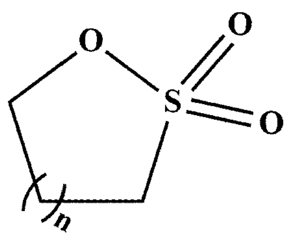

in Formula 2,
n is an integer of 1.

That is, the second additive is 1,3-propane sultone (PS).

The content of the second additiveis in a range of 0.1 wt% to 5 wt% based on the total weight of the non-aqueous electrolyte solution, preferably 0.3 wt% to 3 wt%, and more preferably 0.5 wt% to 2 wt%.

When the content of the second additive is 0.1 wt% or more, it exhibits an effect that contributes to forming a film on an electrode. When the content of the second additive is 5 wt% or less, there is no concern about performance deterioration due to increased resistance.

The non-aqueous electrolyte solution of the present invention comprises a third additive which is one or more of vinylene carbonate (VC) and vinylethylene carbonate (VEC), and preferably comprises vinylene carbonate.

The content of the third additiveis in a range of 0.1 wt% to 5 wt% based on the total weight of the non-aqueous electrolyte solution, preferably 0.5 wt% to 4 wt%, and more preferably 1.0 wt% to 3 wt%.

When the content of the third additive is 0.1 wt% or more, it exhibits an effect of forming a film that protects the negative electrode. When the content of the third additive is 5 wt% or less, there is no concern about performance degradation due to increased resistance.

The weight ratio of the third additive to the first additive is greater than 1. Specifically, the weight ratio of the first additive and the third additive is less than 1:1 and greater than or equal to 1:5. When the content of the third additive is greater than that of the first additive, it is advantageous to strengthen the durability of the negative electrode. However, it is preferable that the content of the third additive is 5 times or less in terms of preventing a resistance increase while optimally obtaining the effects of the two additives.

**(2) Fourth to sixth additives**

In an embodiment of the present invention, the non-aqueous electrolyte solution may further comprise a fourth additive which is an imidazole-based compound. Specifically, the fourth additive may be propargyl 1H-imidazole-1-carboxylate.

The fourth additive may exhibit an effect of modifying the film components of the electrode and suppressing lithium precipitation due to the structure capable of stabilizing the bulk properties of the electrolyte solution and forming a film on an electrode. Thus, it is preferable in terms of suppressing lithium precipitation by improving the durability of the film when used together with the first to third additives.

In an embodiment of the present invention, a content of the fourth additive may be in a range of 0.01 wt% to 3 wt% based on the total weight of the non-aqueous electrolyte solution, preferably 0.05 wt% to 2 wt%, and more preferably 0.1 wt% to 1 wt%.

When the content of the fourth additive is 0.01 wt% or more, it is preferable because it may exhibit an effect of forming a film on the negative electrode. When the content of the fourth additive is 3 wt% or less, it is preferable in that there may not be concern about performance deterioration due to increased resistance.

In an embodiment of the present invention, the weight ratio of the first additive to the fourth additive may be greater than 1. Specifically, the weight ratio of the fourth additive and the first additive may be less than 1:1 and greater than or equal to 1:10, more specifically less than 1:2 and greater than or equal to 1:5. It is preferable that the content of the first additive is greater than that of the fourth additive in terms of forming a film having lower resistance on the electrode. However, it is preferable that the content of the first additive is 10 times or less in terms of controlling side reactions and gas generation while optimally obtaining the effects of the two additives.

In one embodiment of the present invention, the non-aqueous electrolyte solution may further comprise a fifth additive which is N,N'-Dicyclohexyl carbodiimide.

Since the fifth additive may exhibit an effect of stabilizing the bulk properties of an electrolyte solution, it is preferable in that stability according to aging of the additive may be improved when used together with the first to third additives.

In an embodiment of the present invention, a content of the fifth additive may be in a range of 0.01 wt% to 3 wt% based on the total weight of the non-aqueous electrolyte solution, preferably 0.05 wt% to 2 wt%, and more preferably 0.1 wt% to 1 wt%.

When the content of the fifth additive is 0.01 wt% or more, it is preferable because it may exhibit an effect of stabilizing the bulk properties of the electrolyte solution. When the content of the fifth additive is 3 wt% or less, it is preferable in that it does not affect oxidative stability.

In one embodiment of the present invention, the weight ratio of the first additive to the fifth additive may be greater than 1. Specifically, the weight ratio of the fifth additive and the first additive may be less than 1:1 and greater than or equal to 1:20, more specifically less than 1:2 and greater than or equal to 1:10. It is preferable that the content of the first additive is greater than that of the fifth additive in terms of stably forming a film.

In one embodiment of the present invention, the non-aqueous electrolyte solution of the present invention may optionally further comprise a sixth additive, if necessary, in order to prevent an electrolyte solution from decomposing in a high voltage environment, thereby causing electrode collapse, or to further improve low-temperature high-rate discharge characteristics, high-temperature stability, overcharge prevention, the effect of suppressing battery expansion at high temperatures, and the like.

The sixth additive may be one or more selected from a carbonate-based compound, a sultone-based compound, a sulfate-based compound, a phosphate-based or phosphite-based compound, a nitrile-based compound, an amine-based compound, a silane-based compound, a benzene-based compound, a lithium salt-based compound, and an ether-based compound.

The carbonate-based compound may be one or more selected from ethylene carbonate (EC), fluoroethylene carbonate (FEC) and methyl prop-2-ynyl carbonate.

The sultone-based compound may form a stable SEI film by reduction reaction on the surface of the negative electrode, and may be one or more selected from ethene sultone, 1,3-propene sultone (PRS), 1,4-butene sultone, and 1-methyl-1,3-propene sultone.

The sulfate-based compound may be electrically decomposed on the surface of the negative electrode and form a stable SEI film which does not crack even during high temperature storage, and may be one or more selected from

ethylene sulfate (Esa), trimethylene sulfate (TMS),and methyl trimethylene sulfate (MTMS).

The phosphate-based or phosphite-based compound may be one or more selected from lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The nitrile-based compound may be one or more selected from succinonitrile (SN), adiponitrile (ADN), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis (propionitrile) ether (ASA3), 1,3,6-hexanetricarbonitrile (HTCN), 1,4-dicyano-2-butene (DCB) and 1,2,3-tris(2-cyanoethyl) propane (TCEP).

The amine-based compound may be one or more selected from triethanolamine or ethylenediamine, and the silane-based compound may be tetravinylsilane.

The benzene-based compound may be one or more selected from fluorobenzene (FB), difluorobenzene, trifluorobenzene, tetrafluorobenzene, and hexafluorobenzene.

The lithium salt-based compound is a compound different from the lithium salt included in the electrolyte, wherein the lithium salt-based compound may be one or more selected from lithium difluorophosphate (LiDFP; $LiPO_2F_2$), lithium bisoxalatoborate (LiBOB; $LiB(C_2O_4)_2$), lithium tetrafluoroborate($LiBF_4$), lithium difluoro(oxalato)borate (LiODFB), lithium tetraphenylborate, and lithium difluoro(bisoxalato) phosphate(LiDFOP).

The ether-based compound may be one or more selected from 1,1,2,2-Tetrafluoroethyl-2,2,2trifluoroethylether, Bis(trifluoromethyl)-1,3-dioxolane) and 1,1,2,2-Tetrafluoroethyl-2,2,3,3-tetrafluoropropylether.

Meanwhile, the content of the sixth additive may be 0.1 wt% to 20 wt%, preferably 0.3 wt% to 10 wt%, based on the total weight of the non-aqueous electrolyte solution. When the content of the sixth additive is in the above range, it brings out an effect of suppressing side reactions by forming a film on the positive electrode and negative electrode.

**(3) Organic solvent**

The non-aqueous electrolyte solution of the present invention comprises an organic solvent. As the organic solvent, various organic solvents typically used in a lithium electrolyte may be used without limitation. For example, the organic solvent may be a cyclic carbonate-based solvent, a linear carbonate-based solvent, a linear ester-based solvent, a cyclic ester-based solvent, a nitrile-based solvent, a fluorine-based solvent or a mixture thereof.

In an embodiment of the present invention, the organic solvent may be a cyclic carbonate-based solvent and a linear carbonate-based solvent. In this case, there is an advantage in that an electrolyte solution having high ionic conductivity may be prepared.

The cyclic carbonate-based solvent is a high-viscosity and high-dielectric constant organic solvent, and thus may dissociate a lithium salt in an electrolyte well, and may be one or more selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and specifically may include ethylene carbonate (EC).

In addition, the linear carbonate-based solvent is a low-viscosity and low-dielectric constant organic solvent, and may be one or more selected from the group consisting of dimethyl carbonate (DMC), diethyl carbonate (DEC), dipropyl carbonate, ethylmethyl carbonate (EMC), methylpropyl carbonate, and ethylpropyl carbonate, and specifically, may include ethylmethyl carbonate (EMC).

The linear ester-based solvent may be one or more selected from methyl acetate, ethyl acetate, propyl acetate, methyl propionate, ethyl propionate (EP), propyl propionate (PP), and butyl propionate, and preferably may be ethyl propionate, propyl propionate or a mixture thereof.

The cyclic ester-based solvent may be one or more selected from γ-butyrolactone, γ-valerolactone, γ-caprolactone, σ-valerolactone, and ε-caprolactone.

The nitrile-based solvent may be one or more selected from succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and preferably may be succinonitrile.

The fluorine-based solvent may be one or more selected from the group consisting of 1,1,2,2-Tetrafluoroethyl 2,2,3,3-Tetrafluoropropyl Ether, 2,2-Bis(trifluoromethyl)-1,3-dioxolane, 1,1,2,2-Tetrafluoroethyl 2,2,2-trifluoroethyl ether, Trifluoroethyl phosphate, Trifluoroethyl phosphite, Ethyl 4,4,4-trifluorobutyrate, 1,2-ethanedisulfonyl difluoride, ethyl trifluoroacetate, ethyl pentafluoropropanoate, 1-fluoroethyl methyl carbonate (F-EMC), 2,2,2-trifluoroethyl methyl carbonate (F3-EMC), difluoroethyl acetate, methyl difluoroacetate, ethyl difluoroacetate and 1, 1,2,2,3,3,4,4-octafluoro-5-(1,1,2,2,-tetrafluoroethoxy)pentane.

The remainder of the total weight of the non-aqueous electrolyte solution except for the contents of other components, for example, the first to sixth additives and the lithium salt, other than the organic solvent, may be the organic solvent unless otherwise stated.

(4) **Lithium salt**

The non-aqueous electrolyte solution of the present invention includes a lithium salt.

As the lithium salt, any lithium salt typically used in an electrolyte solution for a lithium secondary battery may be used without imitation, and specifically, the lithium salt may include $Li^+$ as positive ions, and one or more selected from $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF$-, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$ as negative ions.

Specifically, the lithium salt may be one or more selected from $LiPF_6$, $LiClO_4$, $LiBF_4$, $LiN(FSO_2)_2$(LiFSI), $LiN(CF_3SO_2)_2$(LiTFSI), lithium bis(pentafluoroethanesulfonyl)imide (LiBETI), $LiSO_3CF_3$, $LiPO_2F_2$, lithium bis(oxalate) borate (LiBOB), lithium difluoro(oxalate)borate (LiODFB), lithium difluoro(bisoxalato) phosphate (LiDFOP), lithium tetrafluoro(oxalate) phosphate (LiTFOP), and lithium fluoromalonato(difluoro) borate (LiFMDFB), and preferably may be $LiPF_6$.

In an embodiment of the present invention, the concentration of the lithium salt in the non-aqueous electrolyte solution including the lithium salt and organic solvent may be 0.5M to 5.0M, specifically 0.5M to 3.0M, and more specifically 0.8M to 2.0M. When the concentration of a lithium salt is in the above range, it sufficiently secures an effect of improving low-temperature output and improving cycle characteristics, and prevents viscosity and surface tension from being excessively increased so that suitable electrolyte impregnation properties may be obtained.

<u>Lithium **secondary battery**</u>

Next, a lithium secondary battery according to the present invention will be described.

The lithium secondary battery according to the present invention includes a positive electrode including a positive electrode active material, a negative electrode including a negative electrode active material, a separator interposed between the positive electrode and the negative electrode, and a non-aqueous electrolyte solution, wherein the non-aqueous electrolyte solution is the non-aqueous electrolyte solution according to the present invention. The non-aqueous electrolyte solution has been described above, and thus, the description thereof will be omitted, and hereinafter, the other components will be described.

(1) Positive electrode

The positive electrode according to the present invention includes a positive electrode active material, and may be prepared by coating a positive electrode slurry including the positive electrode active material, a binder, a conductive material, a solvent, and the like on a positive electrode current collector, followed by drying and roll-pressing.

The positive electrode current collector is not particularly limited as long as it has conductivity without causing a chemical change in the battery. For example, stainless steel; aluminum; nickel; titanium; fired carbon; or aluminum or stainless steel that is surface-treated with one of carbon, nickel, titanium, silver, and the like may be used.

The positive electrode active material is a compound capable of reversible intercalation and de-intercalation of lithium, and for example, may be one or more selected from the group consisting of a lithium-cobalt-based oxide, a lithium-nickel-based oxide, a lithium-nickel-cobalt-based oxide, a lithium-manganese-based oxide, a lithium-nickel-manganese-based oxide, a lithium phosphate-based oxide and a lithium nickel cobalt-manganese-based oxide.

More specifically, the positive electrode active material may comprise one or more selected from the group consisting of a lithium-cobalt-based oxide such as $LiCoO_2$(LCO); a lithium-nickel-based oxide such as $LiNiO_2$(LNO); a lithium-nickel-cobalt-based oxide such as $LiNi_{1-y4}Co_{y4}O_2$($0 \leq y4 < 1$); a lithium-manganese-based oxide such as $LiMnO_2$ (LMO), $LiMnO_3$, $LiMn_2O_3$ and $Li_2MnO_3$; a lithium-nickel-manganese-based oxide such as $Li_{1+y1}Mn_{2-y1}O_4$($0 \leq y1 \leq 0.33$), $LiNi_{y2}Mn_{2-y2}O_4$($0 \leq y2 \leq 2$), $LiNi_{y3}Mn_{2-y3}O_2$($0.01 \leq y3 \leq 0.1$) and $Li_2NiMn_3O_8$; a lithium phosphate-based oxide such as $LiFePO_4$ and $LiCoPO_4$; and a lithium-nickel-cobalt-manganese-based oxide represented by Formula 3 below, and preferably, it may comprise a lithium-nickel-cobalt-manganese-based oxide represented by Formula 3 below.

[Formula 3] $$Li_{1+x}(Ni_aCo_bMn_cM_d)O_2$$

in Formula 3,

M is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo,

1+x, a, b, c and d are each an atomic fraction of an independent element, wherein $-0.2 \leq x \leq 0.2$, $0.80 \leq a < 1$, $0 < b \leq 0.1$, $0 < c \leq 0.1$, $0 \leq d \leq 0.03$, and $a+b+c+d=1$.

The 1+x is the molar ratio of lithium in the lithium-nickel-cobalt-manganese-based oxide, and may be $-0.1<x<0.2$, or $0\leq x\leq 0.2$. When the molar ratio of lithium satisfies the above range, the crystal structure of the lithium-nickel-cobalt-manganese-based oxide may be stably formed.

The a is the molar ratio of nickel among all metals except lithium in the lithium-nickel-cobalt-manganese-based oxide is $0.80\leq a<1$. When the molar ratio of nickel satisfies the above range, high energy density is exhibited and high capacity may be achieved.

The b is the molar ratio of cobalt among all metals except lithium in the lithium-nickel-cobalt-manganese-based oxide is $0<b\leq 0.10$. When the molar ratio of cobalt satisfies the above range, good resistance characteristics and output characteristics may be achieved.

The c is the molar ratio of manganese among all metals except lithium in the lithium-nickel-cobalt-manganese-based oxide is $0<c\leq 0.10$. When the molar ratio of manganese satisfies the above range, the structural stability of the positive electrode active material is exhibited to be excellent.

In an embodiment of the present invention, the lithium-nickel-cobalt-manganese-based oxide may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B and Mo, and preferably may include Al as a doping element. That is, the d which is the molar ratio of doping elements among all metals except lithium in the lithium composite transition metal oxide is $0<d\leq 0.03$.

For example, the lithium-nickel-cobalt-manganese-based oxide may be one or more selected from $Li(Ni_{0.8}Co_{0.1}Mn_{0.1})O_2$ and $Li(Ni_{0.9}CO_{0.05}Mn_{0.04}Al_{0.01})O_2$.

In particular, the lithium-nickel-cobalt-manganese-based oxide may have a Ni content greater than 85 mol% based on the total content of the transition metal. That is, in Formula 3 above, it may be an ultra-high Ni material wherein $0.85\leq a<1$. Here, the b, c and d are each $0<b\leq 0.1$, $0<c\leq 0.1$, and $0\leq d\leq 0.03$.

A positive electrode active material having a high Ni content may be a cause of deteriorating the lifespan of a battery by increasing side reactions and gas generation due to its structural instability. When the non-aqueous electrolyte solution according to the present invention is applied, the effect of improving the film characteristics of the electrode is excellent, so problems caused by applying such a high Ni positive electrode active material may be solved.

The positive electrode active material may be included in an amount of 80 wt% to 99 wt%, specifically 90 wt% to 99 wt% based on the total weight of solids in a positive electrode slurry. Here, when the content of the positive electrode active material is 80 wt% or less, the energy density is lowered to lower the capacity.

The binder is a component for assisting in bonding of an active material and a conductive material, and in bonding to a current collector, and may be typically added in an amount of 1 wt% to 30 wt% based on the total weight of solids in a positive electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, or various copolymers thereof.

In addition, the conductive material is a material imparting conductivity without causing a chemical change in the battery, and may be added in an amount of 0.5 wt% to 20 wt% based on the total weight of solids in a positive electrode slurry.

Examples of the conductive material may include carbon black such as acetylene black, Ketjen black, channel black, furnace black, lamp black, or thermal black; graphite powder of natural graphite, artificial graphite, carbon nanotubes, or graphite; conductive fiber such as carbon fiber or metal fiber; conductive powder such as fluorocarbon powder, aluminum powder, or nickel powder; a conductive whisker such as zinc oxide and potassium titanate; a conductive metal oxide such as titanium oxide; or a conductive material such as a polyphenylene derivative, and the like.

In addition, a solvent of the positive electrode slurry may include an organic solvent such as N-methyl-2-pyrrolidone (NMP), and may be used in an amount such that a preferred viscosity is achieved when the positive electrode active material, the binder, the conductive material, and the like are included. For example, the solvent may be included in an amount such that the concentration of solids in a positive electrode slurry including a positive electrode active material, a binder, and a conductive material is 40 wt% to 90 wt%, preferably 40 wt% to 60 wt%.

(2) **Negative electrode**

The negative electrode according to the present invention includes a negative electrode active material, and may be prepared by coating a negative electrode slurry including the negative electrode active material, a binder, a conductive material, a solvent, and the like on a negative electrode current collector, followed by drying and roll-pressing.

The negative electrode current collector typically has a thickness of 3 μm to 500 μm. The negative electrode current collector is not particularly limited as long as it has high conductivity without causing a chemical change in the battery. For example, copper; stainless steel; aluminum; nickel; titanium; fired carbon, copper or stainless steel that is surface-treated with one of carbon, nickel, titanium, silver, and the like, or an aluminum-cadmium alloy and the like may be used. Also, as in the case of the positive electrode current collector, microscopic irregularities may be formed on the

surface of the negative electrode current collector to improve the coupling force of a negative electrode active material, and the negative electrode current collector may be used in various forms of such as a film, a sheet, a foil, a net, a porous body, a foam body, and a non-woven fabric body.

In addition, the negative electrode active material may include one or more selected from a carbon material capable of reversible intercalation/de-intercalation of lithium ions; a metal or an alloy of the metal and lithium; a metal composite oxide; a material capable of doping and undoping lithium; a lithium metal; and a transition metal oxide.

As the carbon material capable of reversible intercalation/de-intercalation of lithium metals, a carbon-based negative electrode active material commonly used in a lithium ions secondary batteries may be used without particular limitation, and examples thereof may include a crystalline carbon, an amorphous carbon, or a combination thereof. Examples of the crystalline carbon may include graphite such as an irregular, planar, flaky, spherical or fibrous natural graphite, artificial graphite, double-layer graphite, or a mixture thereof, and examples of the amorphous carbon may include soft carbon (low-temperature fired carbon), hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al and Sn or an alloy of the metal and lithium may be used.

As the metal composite oxide, one or more selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3(0\leq x\leq 1)$, $Li_xWO_2(0\leq x\leq 1)$ and $Sn_xMe_{1-x}Me'_yO_z$ (Me: Mn, Fe, Pb, Ge; Me': Al, B, P, Si, an element each in Group 1, Group 2, and Group 3 of the periodic table, halogen: $0<x\leq 1$; $1\leq y\leq 3$; $1\leq z\leq 8$) may be used.

The material capable of doping and undoping lithium may be Si, $SiO_x(0<x<2)$, an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with SiO2 and used. The element Y may be selected from the group consisting of Mg, Ca, Sr, Ba, Ra, Sc, Y, Ti, Zr, Hf, Rf, V, Nb, Ta, Db(dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po and a combination thereof.

Examples of the transition metal oxide include a lithium-containing titanium composite oxide (LTO), a vanadium oxide, a lithium vanadium oxide, and the like.

In an embodiment of the present invention, the negative electrode active material may include a blend of natural graphite and artificial graphite, or double-layer graphite. In such a case, there is an advantage of reducing the costs while improving the performance of the battery.

The negative electrode active material may be included in an amount of 80 wt% to 99 wt% based on the total weight of solids in a negative electrode slurry.

The binder is a component for assisting in bonding among a conductive material, an active material, and a current collector, and may be typically added in an amount of 1 wt% to 30 wt% based on the total weight of solids in a negative electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, or various copolymers thereof.

The conductive material is a component for further improving the conductivity of a negative electrode active material, and may be added in an amount of 0.5 wt% to 20 wt% based on the total weight of solids in a negative electrode slurry. The conductive material is not particularly limited as long as it has conductivity without causing a chemical change in the battery, and for example, carbon black such as acetylene black, Ketjen black, channel black, furnace black, lamp black, or thermal black; graphite powder of natural graphite, artificial graphite, carbon nanotubes, or graphite; conductive fiber such as carbon fiber or metal fiber; conductive powder such as fluorocarbon powder, aluminum powder, or nickel powder; a conductive whisker such as zinc oxide and potassium titanate; a conductive metal oxide such as titanium oxide; or a conductive material such as a polyphenylene derivative, and the like.

A solvent of the negative electrode slurry may include water, or an organic solvent such as NMP, an alcohol, or the like, and may be used in an amount such that a preferred viscosity is achieved when the negative electrode active material, the binder, the conductive material, and the like are included. For example, the solvent may be included in an amount such that the concentration of solids in a slurry including a negative electrode active material, a binder and a conductive material is 30 wt% to 80 wt%, preferably 40 wt% to 70 wt%.

(3) **Separator**

The lithium secondary battery according to the present invention includes a separator between the positive electrode and the negative electrode. The separator is to separate the negative electrode and the positive electrode and to provide a movement path for lithium ions. Any separator typically used as a separator in a lithium secondary battery may be

used without particular limitation, and particularly, a separator which has low resistance to ion movement of an electrolyte solution, has excellent impregnation of an electrolyte solution, and which is safe is preferable.

Specifically, as a separator, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be used in a single-layered or a multilayered structure.

The lithium secondary battery according to the present invention as described above may be usefully used in portable devices such as a mobile phone, a notebook computer, and a digital camera, and in electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-and-large-sized devices, for example, a power tool, an electric car including an electric vehicle (EV), a hybrid electric vehicle, and a plug-in hybrid electric vehicle (PHEV), and a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell in a medium-and-large-sized battery module including a plurality of battery cells.

Hereinafter, the present invention will be described in detail with reference to specific examples.

## MODE FOR CARRYING OUT THE INVENTION

**<Examples and Comparative Examples: Preparation of lithium secondary battery>**

### Example 1

(Preparation of non-aqueous electrolyte solution)

Ethylene carbonate (EC):dimethyl carbonate (DMC) were mixed in a volume ratio of 30:70, and then $LiPF_6$ was dissolved therein to 1.0 M to prepare a non-aqueous organic solution. 1wt% of a compound represented by Formula 1A, 1wt% of 1,3-propane sultone (PS), 2wt% of vinylene carbonate (VC), 0.3 wt% of propargyl 1H-imidazole-1-carboxylate, and the remainder of the non-aqueous organic solution were mixed to prepare 100 wt% of a non-aqueous electrolyte solution.

(Preparation of lithium secondary battery)

To N-methyl-2-pyrrolidone (NMP), $LiNi_{0.9}Co_{0.05}Mn_{0.04}Al_{0.01}O_2$ as a positive electrode active material, a conductive material (carbon black), and a binder (polyvinylidene fluoride) were added at a weight ratio of 98:0.5:1.5 to prepare a positive electrode slurry (solid content: 50 wt%). The positive electrode slurry was applied and dried on an aluminum (Al) thin film having a thickness of about 15 μm as a positive electrode current collector, and then roll pressing was performed thereon to prepare a positive electrode.

A negative electrode active material (graphite in which artificial graphite and natural graphite were blended at a weight ratio of 3:7, a binder (SBR-CMC), and a conductive agent (carbon black) were mixed at a weight ratio of 98:1:1, and then added to water, which is a solvent to prepare a negative electrode mixture slurry (solid content: 60 wt%). The negative electrode mixture slurry was applied on a copper (Cu) thin film having a thickness of about 6 μm as a negative electrode current collector, dried and then roll pressed to prepare a negative electrode.

An electrode assembly was prepared by sequentially stacking the positive electrode, polyolefin-based polymer porous separator coated with inorganic particles ($Al_2O_3$) and negative electrode.

The lithium secondary battery of the present invention was prepared by accommodating the electrode assembly in a pouch-type battery case and injecting the prepared non-aqueous electrolyte solution.

### Example 2

A lithium secondary battery was prepared in the same manner as in Example 1 except that propargyl 1H-imidazole-1-carboxylate was not added when preparing a non-aqueous electrolyte solution.

**Example 3**

A lithium secondary battery was prepared in the same manner as in Example 1 except that 0.1wt% of N,N'-dicyclohexyl carbodiimide was added as a fifth additive when preparing a non-aqueous electrolyte solution.

**Example 4**

A lithium secondary battery was prepared in the same manner as in Example 2 except that 0.1wt% of N,N'-dicyclohexyl carbodiimide was added as a fifth additive when preparing a non-aqueous electrolyte solution.

**Comparative Example 1**

A lithium secondary battery was prepared in the same manner as in Example 1 except that the compound represented by Formula 1A was not added when preparing a non-aqueous electrolyte solution.

**Comparative Example 2**

A lithium secondary battery was prepared in the same manner as in Example 1 except that 1,3-propane sultone (PS) was not added when preparing a non-aqueous electrolyte solution.

**Comparative Example 3**

A lithium secondary battery was prepared in the same manner as in Example 1 except that vinylene carbonate (VC) was not added when preparing a non-aqueous electrolyte solution.

**Comparative Example 4.**

A lithium secondary battery was prepared in the same manner as in Example 2 except that the compound represented by Formula 1A was not added when preparing a non-aqueous electrolyte solution.

**Comparative Example 5**

A lithium secondary battery was prepared in the same manner as in Example 2 except that 1,3-propane sultone (PS) was not added when preparing a non-aqueous electrolyte solution.

**Comparative Example 6**

A lithium secondary battery was prepared in the same manner as in Example 2 except that vinylene carbonate (VC) was not added when preparing a non-aqueous electrolyte solution.

**<Experimental Example: Performance evaluation of lithium secondary battery** >

**Experimental Example 1: Evaluation of high-temparature rapid charging performance**

The lithium secondary batteries prepared in Examples and Comparative Examples above were prepared in a SOC (State Of Charge) 3% state. For each of the lithium secondary batteries, as shown in Table 1 below, the battery was charged with varying C-rates according to the SOC state, and the voltage profile was then measured by checking the voltage value at an interval of 1 second for each charging section.

[Table 1]

| | Charging time (sec) | C-rate(C) |
|---|---|---|
| SOC 3%~61% | 880 | 2.5 |
| SOC 62%~78% | 620 | 1 |

Thereafter, the charge amount was recorded when charged in a CC mode by setting the termination condition with the voltage value for each section obtained in each section, and then the battery was discharged to a SOC of 3% at a rate of 0.5C in a CC mode. The charging/discharging process was defined as one cycle. An initial capacity, which was the discharge capacity of a first cycle, was measured at room temperature (25°C), and the discharge capacity was measured after 100 cycles at 45°C. Based on the measured values, the following Equation 1 was used to calculate the capacity retention rate after rapid charging, and the results thereof are then presented in Table 2 below.

[Equation 1]

$$\text{Capacity retention rate (\%)} = (\text{capacity measured after 100 cycles/initial capacity}) \times 100$$

**Experimental Example 2: Evaluation of Room Temperature Resistance**

For each of the lithium secondary batteries prepared in the Examples and Comparative Examples above, $R_{ct}$ (Charge Transfer Resistance) was measured through electrochemical impedance spectroscopy (EIS) using a VMP-3 model from Bio-logic Science Instruments LTD. Specifically, the $R_{ct}$ values measured after 2 hours while applying an alternating voltage of 10 mV to each battery in a SOC 0% and 50% state at room temperature (25°C) were checked.

The ratio of the $R_{ct}$ value of each battery to the $R_{ct}$ value measured in the battery of Comparative Example 1 was calculated according to Equation 2 below, and then was presented in Table 2 below.

Resistance change rate (%)=($R_{ct}$ of the battery- $R_{ct}$ of the battery of Comparative Example 1)/( $R_{ct}$ of the battery of Comparative Example 1) $\times$ 100 [Equation 2]

**Experimental Example 3: Evaluation of Low Temperature Rapid Discharging Output**

The lithium secondary batteries prepared in the Examples and Comparative Examples above were charged at a rate of 0.2C to 4.2 V under a constant current/constant voltage condition at 25°C, then subjected to 0.05C current cut, and were discharged at a rate of 0.2C to 2.5V under a constant current condition.

Thereafter, each lithium secondary battery was charged at a rate of 0.2C to 4.2 V under a constant current/constant voltage condition at 25°C, then subjected to 0.05C current cut, and were rapidly discharged at a rate of 2C to 2.5 V under a constant current condition at 0°C. At this time, based on the measured discharge capacity, the discharge output after rapid discharging was calculated using Equation 3 below, and the results are presented in Table 2 below.

Discharge output (%)=(capacity measured after rapid discharge /initial discharge capacity) $\times$ 100 [Equation 3]

[Table 2]

| | Electrolyte additive | Experimental Example 1(Evaluation of high temperature rapid charging) | Experimental Example 2(Evaluation of room temperature resistance) | | Experimental Example 3(Evaluation of lowtemperature rapid discharge) |
|---|---|---|---|---|---|
| | | Capacity retention rate(%) | SOC 0% | SOC 50% | Discharge output(%) |
| Example1 | 1st~4th | 89 | -38% | -19% | 72 |
| Example2 | 1st ~ 3rd | 85 | -46% | -24% | 84 |
| Example3 | 1st ~ 5th | 92 | -39% | -19% | 75 |
| Example4 | 1st ~3rd, 5th | 87 | -45% | -25% | 86 |
| Comparative Example 1 | 2nd~4th | 65 | standard | standard | 49 |
| Comparative Example2 | 1st, 3rd, 4th | 72 | -7% | -4% | 54 |
| Comparative Example3 | 1st, 2nd, 4th | 69 | -13% | -6% | 58 |

(continued)

| | Electrolyte additive | Experimental Example 1(Evaluation of high temperature rapid charging) | Experimental Example 2(Evaluation of room temperature resistance) | | Experimental Example 3(Evaluation of lowtemperature rapid discharge) |
|---|---|---|---|---|---|
| | | Capacity retention rate(%) | SOC 0% | SOC 50% | Discharge output(%) |
| Comparative Example4 | 2nd, 3rd | 62 | Not measured | -8% | 44 |
| Comparative Example5 | 1st, 3rd | 68 | Not measured | -12% | 56 |
| Comparative Example6 | 1st, 2nd | 66 | Not measured | -10% | 55 |

Referring to Table 2 above, it may be understood that Examples 1 to 4 using the non-aqueous electrolyte including all the first to third additives according to an embodiment of the present invention exhibited superior results in evaluating rapid charging, room-temperature resistance, and low-temperature rapid discharging compared to Comparative Examples 1 to 6. In particular, it is meaningful in improving the performance of batteries using ultra-high nickel positive electrode materials during rapid charging and discharging under various temperature conditions.

Specifically, in Comparative Examples 1 to 3, the non-aqueous electrolyte solution was used under the same conditions as Example 1 except that the first additive, the second additive, and the third additive were not included, respectively. In Comparative Examples 4 to 6, only the first additive, the second additive, and the third additive were not included under the same conditions as Example 2, respectively. By comparing the results of Example 1 and Comparative Examples 1 to 3 and Example 2 and Comparative Examples 4 to 6, it may be understood that it is essential to include all the first to third additives in order to achieve the effect of the present invention.

## Claims

**1.** A lithium secondary battery comprising:

a positive electrode comprising a positive electrode active material;
a negative electrode comprising a negative electrode active material;
a separator disposed between the positive electrode and the negative electrode; and
a non-aqueous electrolyte solution comprising:

an organic solvent;
a lithium salt;
a first additive which is a compound represented by Formula 1;
a second additive which is a compound represented by Formula 2; and
a third additive which is one or more of vinylene carbonate and vinylethylene carbonate;

[Formula 1] $P[OSi(R1)_3]_3$

in Formula 1, R1 is an alkyl group having 1 to 5 carbon atoms,

[Formula 2]

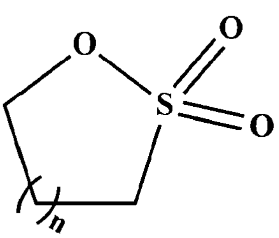

in Formula 2, n is an integer of 1;
wherein the content of the first additive is in the range of 0.1 wt% to 5 wt% based on the total weight of the non-aqueous electrolyte solution;
the content of the second additive is in the range of 0.1 wt% to 5 wt% based on the total weight of the non-aqueous electrolyte solution;
the weight ratio of the third additive to the first additive is greater than 1:1 and less than or equal to 5:1; and
the positive electrode active material comprises a lithium-nickel-cobalt-manganese-based composite oxide represented by Formula 3:

[Formula 3] $Li_{1+x}(Ni_aCo_bMn_cM_d)O_2$

in Formula 3,
M is one or more of W, Cu, Fe, V, Cr, Ti, Zr, Zn, Al, In, Ta, Y, La, Sr, Ga, Sc, Gd, Sm, Ca, Ce, Nb, Mg, B and Mo,
1+x, a, b, c and d are each an atomic fraction of an independent element,
$-0.2 \le x \le 0.2$, $0.80 \le a < 1$, $0 < b \le 0.1$, $0 < c \le 0.10$, $0 \le d \le 0.03$, and $a+b+c+d=1$.

**2.** The lithium secondary battery of claim 1, wherein in Formula 1, R1 is a methyl group.

**3.** The lithium secondary battery of claim 1, wherein the non-aqueous electrolyte solution further comprises a fourth additive which is an imidazole-based compound.

**4.** The lithium secondary battery of claim 3, wherein the fourth additive is propargyl 1H-imidazole-1-carboxylate.

**5.** The lithium secondary battery of claim 3, wherein the weight ratio of the first additive to the fourth additive is greater than 1.

**6.** The lithium secondary battery of claim 3, wherein the non-aqueous electrolyte solution further comprises a fifth additive which is N,N'-dicyclohexyl carbodiimide.

**7.** The lithium secondary battery of claim 1, wherein the organic solvent comprises a mixture of a cyclic carbonate-based solvent and a linear carbonate-based solvent.

**8.** The lithium secondary battery of claim 1, wherein the negative electrode active material comprises a blend of natural graphite and artificial graphite, or double-layer graphite.

## Patentansprüche

**1.** Lithiumsekundärbatterie, umfassend:

eine positive Elektrode, die ein Aktivmaterial für eine positive Elektrode umfasst;
eine negative Elektrode, die ein Aktivmaterial für eine negative Elektrode umfasst,
einen Separator, der zwischen der positiven Elektrode und der negativen Elektrode angeordnet ist, und
eine nichtwässrige Elektrolytlösung, umfassend:

ein organisches Lösungsmittel,
ein Lithiumsalz,
ein erstes Additiv, das eine durch Formel 1 dargestellte Verbindung ist,
ein zweites Additiv, das eine durch Formel 2 dargestellte Verbindung ist, und
ein drittes Additiv, das eines oder mehrere von Vinylencarbonat und Vinylethylencarbonat ist,

[Formel 1] $P[OSi(R1)_3]_3$

in Formel 1 ist R1 eine Alkylgruppe mit 1 bis 5 Kohlenstoffatomen,

[Formel 2]

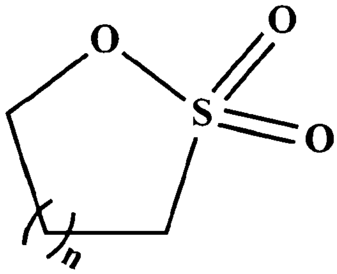

in Formel 2 ist n eine ganze Zahl von 1,
wobei der Gehalt des ersten Additivs im Berich von 0,1 Gew.-% bis 5 Gew.-%, bezogen auf das Gesamtgewicht der nichtwässrigen Elektrolytlösung, liegt,
der Gehalt des zweiten Additivs im Bereich von 0,1 Gew.-% bis 5 Gew.-%, bezogen auf das Gesamtgewicht der nichtwässrigen Elektrolytlösung, liegt,
das Gewichtsverhältnis des dritten Additivs zum ersten Additiv größer als 1:1 und kleiner als oder gleich 5:1 ist und
das Aktivmaterial für eine positive Elektrode ein durch Formel 3 dargestelltes Mischoxid auf Lithium-Nickel-Cobalt-Mangan-Basis umfasst:

[Formel 3] $Li_{1+x}(Ni_aCo_bMn_cM_d)O_2$

in Formel 3
ist M eines oder mehrere von W, Cu, Fe, V, Cr, Ti, Zr, Zn, Al, In, Ta, Y, La, Sr, Ga, Sc, Gd, Sm, Ca, Ce, Nb, Mg, B und Mo,
1+x, a, b, c und d sind jeweils ein Atomanteil eines unabhängigen Elements,
$-0,2 \leq x \leq 0,2$, $0,80 \leq a < 1$, $0 < b \leq 0,1$, $0 < c \leq 0,10$, $0 \leq d \leq 0,03$ und $a+b+c+d=1$.

**2.** Lithiumsekundärbatterie nach Anspruch 1, wobei in Formel 1 R1 eine Methylgruppe ist.

**3.** Lithiumsekundärbatterie nach Anspruch 1 wobei die nichtwässrige Elektrolytlösung ferner ein viertes Additiv umfasst, das eine Verbindung auf Imidazolbasis ist.

**4.** Lithiumsekundärbatterie nach Anspruch 3, wobei das vierte Additiv Propargyl-1H-imidazol-1-carboxylat ist.

**5.** Lithiumsekundärbatterie nach Anspruch 3, wobei das Gewichtsverhältnis des ersten Additivs zum vierten Additiv größer als 1 ist.

**6.** Lithiumsekundärbatterie nach Anspruch 3, wobei die nichtwässrige Elektrolytlösung ferner ein fünftes Additiv umfasst, das N,N'-Dicyclohexylcarbodiimid ist.

**7.** Lithiumsekundärbatterie nach Anspruch 1, wobei das organische Lösungsmittel eine Mischung aus einem Lösungsmittel auf Basis eines cyclischen Carbonats und einem Lösungsmittel auf Basis eines linearen Carbonats umfasst.

**8.** Lithiumsekundärbatterie nach Anspruch 1, wobei das Aktivmaterial für eine negative Elektrode ein Gemisch aus natürlichem Graphit und künstlichem Graphit oder Doppelschichtgraphit ist.

## Revendications

**1.** Batterie secondaire au lithium comprenant :

une électrode positive comprenant un matériau actif d'électrode positive ;
une électrode négative comprenant un matériau actif d'électrode négative ;
un séparateur disposé entre l'électrode positive et l'électrode négative ; et

une solution électrolytique non aqueuse comprenant :

un solvant organique ;
un sel de lithium ;
un premier additif qui est un composé représenté par la Formule 1 ;
un deuxième additif qui est un composé représenté par la Formule 2 ; et
un troisième additif qui est un ou plusieurs composés parmi le le carbonate de vinylène et le carbonate de vinylethylène ;

[Formule 1] $P[OSi(R1)_3]_3$

dans la Formule 1, R1 est un groupe alkyle présentant 1 à 5 atomes de carbone,

[Formule 2]

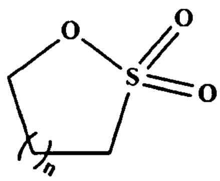

dans la Formule 2, n est un nombre entier de 1 ;
dans laquelle la teneur du premier additif est dans la plage allant de 0,1 % en poids à 5 % en poids sur la base du poids total de la solution électrolytique non aqueuse ;
la teneur du deuxième additif est dans la plage allant de 0,1 % en poids à 5 % en poids sur la base du poids total de la solution électrolytique non aqueuse ;
le rapport en poids du troisième additif sur le premier additif est supérieur à 1:1 et inférieur ou égal à 5:1 ; et le matériau actif d'électrode positive comprend un oxyde composite à base de lithium-nickel-cobalt-manganèse représenté par la Formule 3 :

[Formule 3] $Li_{1+x}(Ni_aCo_bMn_cM_d)O_2$

dans la Formule 3,
M est un ou plusieurs éléments parmi W, Cu, Fe, V, Cr, Ti, Zr, Zn, Al, In, Ta, Y, La, Sr, Ga, Sc, Gd, Sm, Ca, Ce, Nb, Mg, B et Mo,
1+x, a, b, c et d sont chacun une fraction atomique d'un élément indépendant,
$-0,2\leq x\leq 0,2$, $0,80\leq a<1$, $0<b\leq 0,1$, $0<c\leq 0,10$, $0\leq d\leq 0,03$, et $a+b+c+d=1$.

2. Batterie secondaire au lithium selon la revendication 1, dans laquelle dans la Formule 1, R1 est un groupe méthyl.

3. Batterie secondaire au lithium selon la revendication 1, dans laquelle la solution électrolytique non aqueuse comprend en outre un quatrième additif qui est un composé à base d'imidazole.

4. Batterie secondaire au lithium selon la revendication 3, dans laquelle le quatrième additif est le propargyl 1H-imidazole-1-carboxylate.

5. Batterie secondaire au lithium selon la revendication 3, dans laquelle le rapport en poids du premier additif sur le quatrième additif est supérieur à 1.

6. Batterie secondaire au lithium selon la revendication 3, dans laquelle la solution électrolytique non aqueuse comprend en outre un cinquième additif qui est le N,N'-dicyclohexyl carbodiimide.

7. Batterie secondaire au lithium selon la revendication 1, dans laquelle le solvant organique comprend un mélange d'un solvant à base de carbonate cyclique et d'un solvant à base de carbonate linéaire.

8. Batterie secondaire au lithium selon la revendication 1, dans laquelle le matériau actif d'électrode négative comprend un mélange de graphite naturel et de graphite artificiel, ou de graphite à double couche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210143854
- CN 111740163 A
- CN 113328143 A